# EUROPEAN PATENT SPECIFICATION

(11) **EP 3 163 197 B1**
(45) Date of publication and mention of the grant of the patent: **26.02.2020**
(21) Application number: 16196414.3
(22) Date of filing: 28.10.2016
(51) Int. Cl.: F24F 6/16, F24F 6/04, F24F 3/16

(54) **HUMIDIFICATION AND AIR CLEANING APPARATUS**
BEFEUCHTUNGS- UND LUFTREINIGUNGSVORRICHTUNG
APPAREIL DE PURIFICATION ET D'HUMIDIFICATION DE L'AIR

(30) Priority: 30.10.2015 US 201562248463 P; 07.11.2015 KR 20150156254; 24.12.2015 KR 20150185850; 28.03.2016 KR 20160037235; 27.06.2016 US 201662355118 P; 30.06.2016 KR 20160083062; 06.10.2016 KR 20160129319
(43) Date of publication of application: 03.05.2017
(73) Proprietor: LG Electronics Inc., Seoul 07336 (KR)
(72) Inventor: Son, Sanghyuk, 08592 Seoul (KR); Lee, Jungwoo, 08592 Seoul (KR); Lee, Younggu, 08592 Seoul (KR); Jeong, Unchang, 08592 Seoul (KR); Chong, Chungook, 08592 Seoul (KR); Kim, Taeyoon, 08592 Seoul (KR); Choi, Jieun, 08592 Seoul (KR); Lee, Kunyoung, 08592 Seoul (KR); Lee, Jongsu, 08592 Seoul (KR); Lee, Kyoungho, 08592 Seoul (KR)
(74) Representative: Ter Meer Steinmeister & Partner

(56) References cited:
- WO-A1-2015/016657
- JP-A- 2003 339 817
- JP-A- 2004 154 535
- JP-A- 2010 216 710
- JP-A- 2015 059 671
- US-A- 3 188 007

## Description

### BACKGROUND OF THE INVENTION

The present invention disclosed herein relates to an apparatus for both humidification and air cleaning.

Air conditioning apparatuses include air conditioners that control the temperature of air, air cleaners that remove foreign substances from air to maintain air cleanliness, humidifiers that increase humidity in the air, and dehumidifiers that reduce humidity in the air.

Typical humidifiers are classified into a vibration type which atomizes water on a vibrating plate and discharges it into air and a natural evaporation type that evaporates water in a humidification filter.

The natural evaporation type of humidifier is classified into a disc type of humidifier which rotates a disc using a driving force and allows water to naturally evaporate from the surface of the disc in the air and a humidification filter type of humidifier which allows water to naturally evaporate from a wet humidification medium by flowing air.

In a typical humidifier, a portion of flowing air during the humidification process is filtered by a filter. However, since the main function of a typical humidifier is a humidification function, its air cleaning function is weak.

Also, since a typical humidifier has a structure in which the humidification process is performed by adding a filtration function, a typical humidifier cannot be operated only for air filtration.

Accordingly, even in a situation where humidity is high, a typical humidifier inevitably performs humidification even though a user desires air cleaning.

JP 2010 216710 A describes a mist generator including: a rotor for scattering supplied liquid to the periphery by centrifugal force to convert the liquid to mist; and the housing stored the rotor inside and having a mist injection port for injecting the generated mist to outside. A fiber layer having water retention by assembling a large number of fibers is provided at least in part of the outer face of the housing.

JP 2004 154535 A describes a minus ion generator comprising a first and second enclosure which is installed detachably on the first enclosure and covers a water reservoir. A mist generating mechanism is rotated by a motor, an air supply mechanism is provided for supplying the air drawn into the minus ion generator by the rotation of the motor to the mist generating mechanism, and there are vapor and liquid separating means which is in one piece with the second enclosure and surrounds the mist generating mechanism.

US 3,188,007 A describes a humidifier which atomizes water in air.

JP 2015 59671 A describes also a humidifier.

### SUMMARY OF THE INVENTION

The present invention provides a humidification and air cleaning apparatus which can separately operate a humidification function and an air cleaning function.

The present invention also provides a humidification and air cleaning apparatus which allows a user to check water drops formed on a visual body and to intuitively know the humidification state.

The present invention also provides a humidification and air cleaning apparatus which can allow a water height to be uniform by obstructing a rotation of water.

The present invention also provides a humidification and air cleaning apparatus which can guide the water rotating along an inner sidewall of a water tank to the center.

The objectives of the present invention are not limited to the above-mentioned objectives, and other objectives that are not mentioned will be clearly understood by persons skilled in the art from the following description.

The object is solved by the features of the independent claim. Preferred embodiments are given by the dependent claims.

Embodiments of the present invention provide humidification and air cleaning apparatuses including: a water tank storing water; a watering housing disposed inside the water tank, rotating as receiving a torque of a watering motor, suctioning water of the water tank to the inside as rotating, and after pumping the suctioned water upwardly, spraying the pumped water; and a leveler disposed inside the water tank and protruding to the inside of the water tank, wherein when the watering housing rotates, the leveler obstructs a rotation of water .

In some embodiments, the leveler may be disposed at an inner floor of the water tank.

In some embodiments, the leveler may form a gradient at an inner floor of the water tank.

In some embodiments, when the watering housing rotates, the leveler may be disposed to guide water from the outside of the water tank to the inside.

In some embodiments, the leveler may be disposed at an inner sidewall of the water tank.

In some embodiments, the leveler may be formed protruding from the inner sidewall of the water tank toward the inside.

In some embodiments, the leveler may include a rib protruding from an inner sidewall of the water tank toward the inside.

In some embodiments, the leveler may include a rib protruding upwardly from an inner floor of the water tank.

In some embodiments, the leveler may be formed extending long in a length direction and may be formed in a straight line or arc shape.

In some embodiments, the watering housing may be spaced away from an inner floor of the water tank to form a suction gap and the leveler may guide water to the suction gap.

The leveler include a flow guide formed at an inner floor of the water tank; and the flow guide includes a first inclination surface disposed slanted to the floor and formed toward a flow direction of water, a second inclination surface disposed slanted to the floor and formed slanted in a direction opposite to the first inclination surface, and a boundary connecting the first inclination surface and the second inclination surface.

In some embodiments, an inclination angle of the first inclination surface may be formed smaller than an inclination angle of the second inclination surface.

In some embodiments, the inside of the flow guide may be spaced away from the watering housing and the outside of the flow guide maybe spaced away from a sidewall of the water tank.

In some embodiments, the flow guide may be disposed in plurality; the plurality of flow guides may be disposed in a circumferential direction on the basis of the watering housing; and the plurality of flow guides may be spaced away from each other.

In some embodiment, the watering housing may be spaced away from the inner floor of the water tank to form a suction gap and the flow guide may be located higher than the suction gap.

In some embodiments, the flow guide may be formed extending long in a length direction and may be formed in a straight line or arc shape.

### BRIEF DESCRIPTION OF THE DRAWINGS

The accompanying drawings are included to provide a further understanding of the present invention, and are incorporated in and constitute a part of this specification. The drawings illustrate exemplary embodiments of the present invention and, together with the description, serve to explain principles of the present invention. In the drawings:
FIG. 1 is a perspective view illustrating a humidification and air cleaning apparatus according to a first embodiment of the present invention;
FIG. 2 is an exploded perspective view of FIG. 1;
FIG. 3 is an exploded front view of FIG. 1;
FIG. 4 is an exploded cross-sectional view of FIG. 3;
FIG. 5 is a view illustrating an air flow of the humidification and air cleaning apparatus according to the first embodiment of the present invention;
FIG. 6 is a perspective view of an air wash module shown in FIG. 2 when seen from the lower side;
FIG. 7 is a front view of an air wash module shown in FIG. 2;
FIG. 8 is a cross-sectional view taken along a line A-A of FIG. 7;
FIG. 9 is a left cross-sectional view of the air wash module shown in FIG. 2;
FIG. 10 is a cross-sectional view taken along a line B-B of FIG. 9;
FIG. 11 is an exploded perspective view of the water tank base shown in FIG. 6;
FIG. 12 is a perspective view when seen from the upper side of FIG. 11;
FIG. 13 is a bottom view of FIG. 11;
FIG. 14 is a cross-sectional view taken along a line B-B of FIG. 13;
FIG. 15 is a partial enlarged view of FIG. 14;
FIG. 16 is an enlarged view of D shown in FIG. 8;
FIG. 17 is an enlarged view of E shown in FIG. 8;
FIG. 18 is an enlarged view of G shown in FIG. 8;
FIG. 19 is a cross-sectional view taken along a line L-L of FIG. 10;
FIG. 20 is a view illustrating a leveler according to a second embodiment of the present invention;
FIG. 21 is a view illustrating a leveler
FIG. 22 is a view illustrating a leveler according to a fourth embodiment of the present invention;

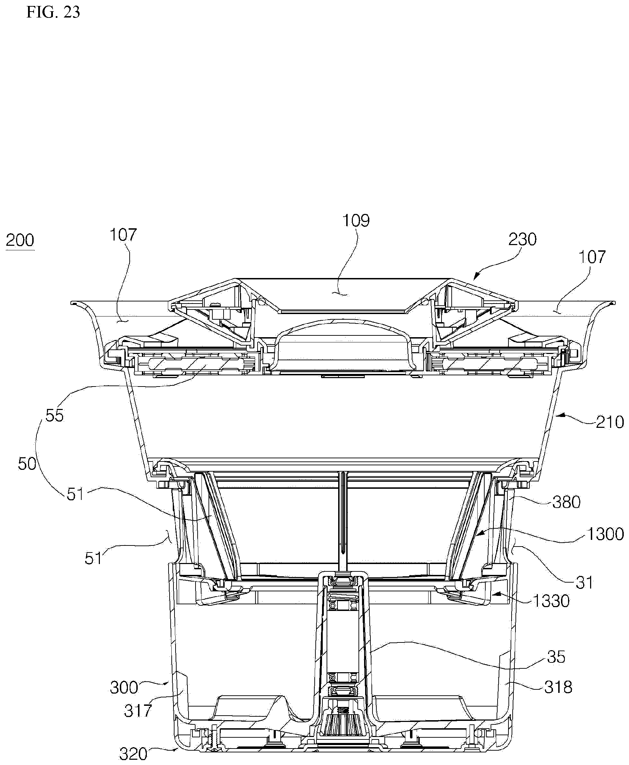

FIG. 23 is a front view of FIG. 22; and
FIG. 24 is a view illustrating a flow guide according to a fifth embodiment of the present invention.

### DETAILED DESCRIPTION OF PREFERRED EMBODIMENTS

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are pro-not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Hereinafter, exemplary embodiments of the present invention will be described in detail with reference to the accompanying drawings.

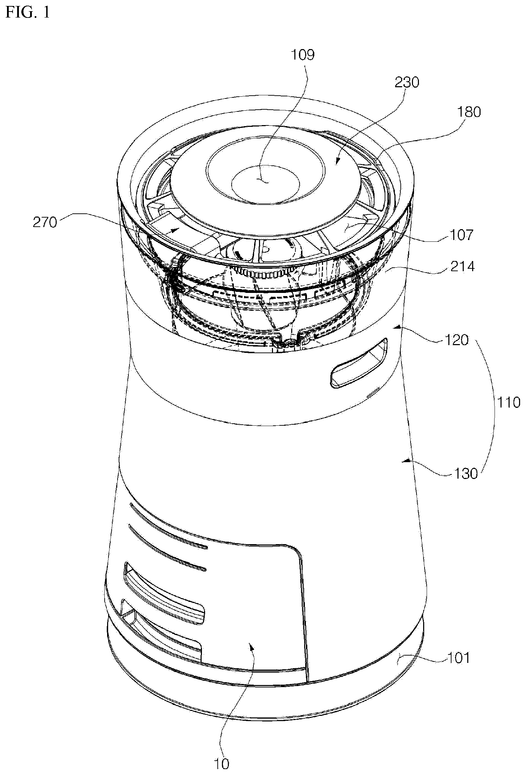

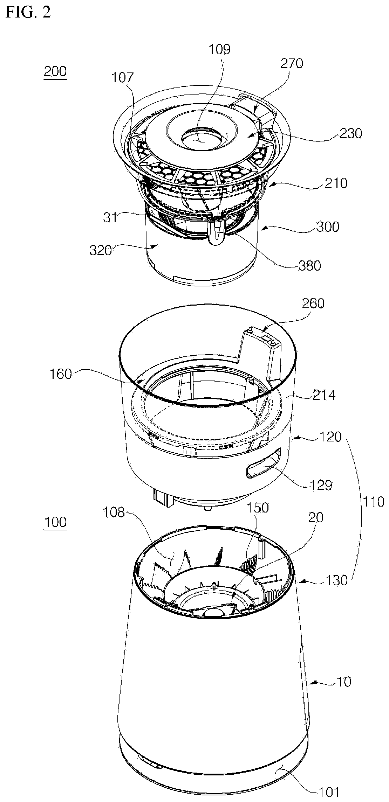

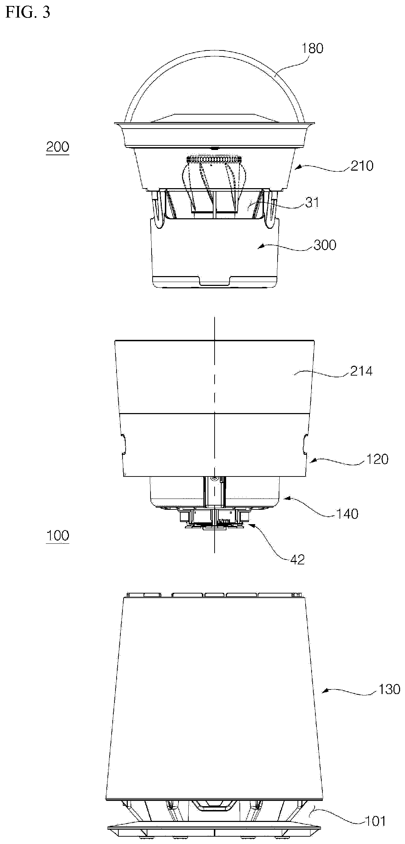

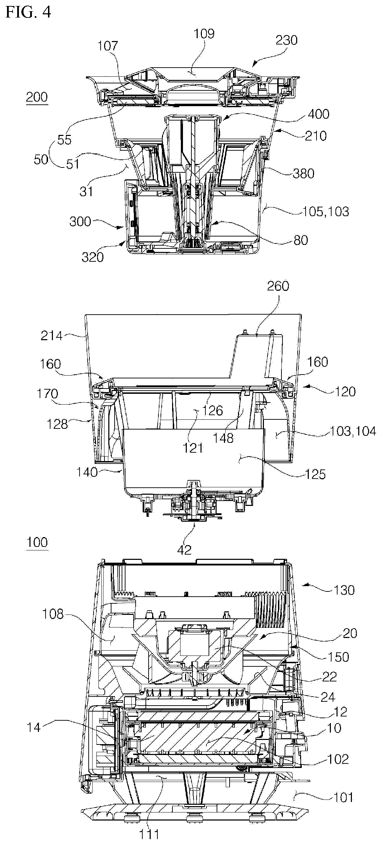

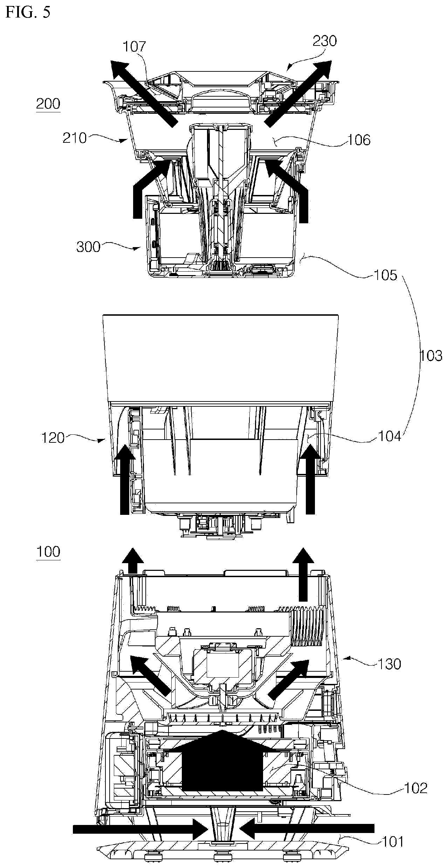

FIG. 1 is a perspective view illustrating a humidification and air cleaning apparatus according to a first embodiment of the present invention. FIG. 2 is an exploded perspective view of FIG. 1. FIG. 3 is an exploded front view of FIG. 1. FIG. 4 is an exploded cross-sectional view of FIG. 3. FIG. 5 is a perspective view when seen from the lower side of FIG. 2.

A humidification and air cleaning apparatus according to an embodiment of the present invention may include an air clean module 100 and an air wash module 200 disposed over the air clean module 100.

The air clean module 100 may take in and filter external air, and may provide filtered air to the air wash module 200. The air wash module 200 may be supplied with filtered air, may perform humidification to provide moisture, and may discharge humidified air to the outside.

The air wash module 200 may include a water tank 300 for storing water. The water tank 300 may be separable from the air clean module 100 when the air wash module 200 is separated. The air wash module 200 may be disposed over the air clean module 100.

A user can separate the air wash module 200 from the air clean module 100, and can clean the air wash module 200 that is separated. A user may also clean the inside of the air clean module 100 from which the air wash module 200 is separated. When the air wash module 200 is separated, the upper surface of the air clean module 100 may be opened to a user. The air clean module 100 may be cleaned after separately removing a filter assembly 10 described later.

A user may supply water into the air wash module 200. The air wash module 200 may have a water supply flow passage formed therein to supply water from the outside to the water tank 300.

The water supply flow passage may be configured to supply water into the water tank 300 at any moment. For example, even when the air wash module 200 is operating, water can be supplied through the water supply flow passage. For example, even when the air wash module 200 is coupled to the air clean module 100, water can be supplied through the water supply flow passage. For example, even when the air wash module 200 is decoupled from the air clean module 100, water can be supplied through the water supply flow passage.

The air clean module 100 and the air wash module 200 may be connected to each other through a connection flow passage 103. Since the air wash module 200 is separable, the connection flow passage 103 may be distributedly formed at the air clean module 100 and the air wash module 200.

The connection flow passage formed in the air clean module 100 may be defined as a clean connection flow passage 104, and the connection flow passage formed in the air wash module 200 may be defined as a humidification connection flow passage 105. When the air wash module 200 is mounted on the air clean module 100, for the first time, the connection flow passage may be connected and the flow passage of air may be configured accurately.

The flow of air passing through the air clean module 100 and the air wash module 200 will be described in more detail later.

A configuration of the air clean module 100 will be described in more detail as follows.

The air clean module 100 may include a base body 110 where an intake flow passage 101 and a clean connection flow passage 104 are formed, a filter assembly 10 disposed detachable from the base body 110 and performing filtration on flowing air, and an air blowing unit 20 disposed inside the base body 110 and flowing air.

External air may be entered into the inside of the base body 110 through the intake flow passage 101. The air filtered in the filter assembly 10 may be provided to the air wash module 200 through the clean connection flow passage 104.

In this embodiment, the base body 110 may be configured with two parts.

The base body 110 may include the lower body 130 defining the exterior thereof and having an inlet hole 110 formed in the undersurface thereof, and the upper body 120 defining the exterior thereof and coupled to the upper side of the lower body 130.

A display module 160 may be disposed in at least one of the air clean module 100 or the air wash module 200 to display the operational state to a user. In this embodiment, the display module 160 may be disposed in the base body 110 to display the operational state of the humidification and air cleaning apparatus to a user.

The upper body 120 and the lower body 130 may be assembled integrally. Unlike this embodiment, the upper body 120 and the lower body 130 may be manufactured as one.

The air wash module 200 may be detachably mounted on the upper side of the upper body 120 and support the weight of the air wash module 200.

The upper body 120 may provide a structure where the water tank 300 is mounted stably. The upper body 120 may have a structure where the water tank 300 of the air wash module 200 is separable. The upper body 120 may have a concave structure for receiving the water tank 300.

The upper body 120 may be convavely formed inside the base body 110 and the water tank 300 may be received inside the base body 110. Through this, the center of gravity of an air cleaner may be further moved to the lower side.

An air cleaner according to this embodiment may receive power through the air clean module 100 and provide power to the air wash module 200 through the air clean module 100. Since the air wash module 200 has a structure separable from the air clean module 100, the air clean module 100 and the air wash module 200 may be provided with a separable power supply structure.

Since the air clean module 100 and the air wash module 200 are assembled through the upper body 120, a connector 260 may be disposed in the upper body 120 to provide power for the air wash module 200. A top connector 270 may be disposed in the top cover assembly 230, and may be separably connected to the connector 260. When the top cover assembly 230 is placed, the top connector 270 may be disposed over the connector 260. The top cover assembly 230 may be supplied with electricity from the connector 260 via the top connector 270.

The filter assembly 10 may be assembled to be detachable from the base body 110.

The filter assembly 10 may provide the filtering flow passage 102, and may filter external air.

The filter assembly 10 may have a structure that is detachable from the base body 110 in a horizontal direction. The filter assembly 10 may be disposed so as to cross the flowing direction of air that flows upstream in a vertical direction. The filter assembly 10 may be disposed in a horizontal direction orthogonal to the flow of air flowing from the lower side to the upper side.

The filter assembly 10 may slide in a horizontal direction with respect to the base body 110.

The air blowing unit 20 may generate flowing of air. The air blowing unit 20 may be disposed inside the base body 110, and may allow air to flow from the lower side to the upper side.

The air blowing unit 20 may include a blower housing 150, a blower motor 22, and a blower fan 24. In this embodiment, the blower motor 22 may be disposed at an upper side, and the blower fan 24 may be disposed at a lower side.

The blower housing 150 may be disposed inside the base body 110. The blower housing 150 may provide a flow passage of flowing air. The blower motor 22 and the blower fan 24 may be disposed in the blower housing 150.

The blower housing 150 may be disposed over the filter assembly 10, and may be disposed under the upper body 120.

The blower fan 24 may be a centrifugal fan, and may blow air from the lower side thereof and discharge air to the outside in a radial direction. The blower fan 24 may discharge air to the upper side and the outside in a radial direction. The outer end of the blower fan 24 may be disposed to direct to the upper side in a radial direction.

The blower motor 22 may be disposed over the blower fan 24 to minimize contact with flowing air. The blower motor 22 may not be located on an air flow passage by the blower fan 24.

The air wash module 200 may include a water tank 300, a watering unit 400, a humidification medium 50, a visual body 210, and a top cover assembly 230. The water tank 300 may store water for humidification, and may be detachably disposed over the air clean module 100. The watering unit 400 may be disposed in the water tank 300, and may spray water in the water tank 300. The humidification medium 50 may be wetted with water sprayed from the watering unit 400, and may provide moisture to flowing air. The visual body 210 may be coupled to the water tank 300, and may be formed of a transparent material. The top cover assembly 230 may be detachably disposed over the visual body 210, and may include a discharge flow passage 107 through which air is discharged and a water supply flow passage 109 through which water is supplied.

The water tank 300 may be mounted on the upper body 120. The watering unit 400 may be disposed inside the water tank 300, and may rotate inside the water tank 300.

The watering unit 400 may draw water inside the water tank 300, upwardly pump the drawn water, and then spray the pumped water toward the outside in a radial direction. The watering unit 400 may include the watering housing 800 that draws water, upwardly pumps drawn water, and then sprays pumped water toward the outside in a radiation direction.

Water sprayed from the watering housing 800 may wet the humidification medium 50. Water sprayed from the watering housing 800 may be sprayed toward at least one of the visual body 210 and the humidification medium 50.

In this embodiment, the watering housing 800 may spray water to the inner side surface of the visual body 210, and sprayed water may flow down along the inner side surface of the visual body 210. Droplets formed in a form of water drop may be formed on the inner side surface of the visual body 210, and a user can see droplets through the visual body 210.

The visual body 210 may be coupled to the water tank 300, and may be located over the water tank 300. At least a portion of visual body 210 may be formed of a material through which a user can see the inside.

The droplet formed at the inner side surface of the visual body 210 may implement a raindrop shape. The droplet flowing down from the visual body 210 may wet the humidification medium 50.

A display module 160 may be disposed outside the visual body 210. The display module 160 may be coupled to any one of the visual body 210 and the upper body 120. In this embodiment, the display module 160 may be disposed at the upper body 120.

When the air wash module 200 is placed, the outer surface of the visual body 210 may adhere closely to the display module 160. At least a portion of the surface of the display module 160 may be formed of a material that reflects light.

Droplets formed on the visual body 210 may also be projected onto the surface of the display module 160. Accordingly, a user can observe the motion of droplets at both visual body 210 and display module 160.

The water tank 300 may include a water tank inlet 31 through which air passes. The air supplied from the air clean module 100 may flow into the air wash module 200 through the water tank inlet 31.

The humidification medium 50 may include a water tank humidification medium 51 disposed at the connection flow passage 103, and a discharge humidification medium 55 disposed at the discharge flow passage 107.

The water tank humidification medium 51 may be disposed on the connection flow passage 103 and in this embodiment, may be disposed at the water tank inlet 31 of the water tank 300. The water tank humidification medium 51 may be disposed inside the water tank inlet 31 and provide humidification on air passing through the water tank inlet 31.

The water tank humidification medium 51 may cover the water tank inlet 31, and air may penetrate the water tank humidification medium 51 to flow into the water tank 300.

The discharge humidification medium 55 may be disposed on the discharge flow passage 107. The discharge humidification medium 55 may be disposed on at least one of the visual body 21 or the top cover assembly 230. In this embodiment, the discharge humidification medium 55 may be disposed at the top cover assembly 230.

The discharge humidification medium 55 may cover the discharge flow passage 107, and air may penetrate the discharge humidification medium 55 to flow to the outside of the top cover assembly 230.

Hereinafter, the flow of air will be described with reference to the accompanying drawings.

When the air blowing unit 20 operates, external air may flow into the base body 110 through the intake flow passage 101 formed at a lower side of the base body 110. Air entered through the intake flow passage 101 may pass the air clean module 100 and the air wash module 200 while moving upward, and may be discharged to the outside through the discharge flow passage 107 formed at an upper side of the air wash module 200.

The air entered to the intake flow passage 101 may pass through the filtering flow passage 102 of the filter assembly 10. As the air passes through the filtering flow passage 102, the filter assembly 10 may filter external air.

Air passing the filtering flow passage 102 may flow to the connection flow passage through the air blowing unit 20. After the air passing through the filtering flow passage 102 is pressed by the blower fan 24, it flows to the connection flow passage 103 along the flower fan housing 150.

Since the air blowing unit 20 is disposed next to the filtering flow passage 102, adherence of foreign substances like dust on the blower fan 24 can be minimized.

If the air blowing unit 20 is disposed before the filtering flow passage 102, foreign substances may be attached to the blower fan 24, and due to this, a cleaning cycle may be shortened.

Also, since the air blowing unit 20 is disposed at the front of the humidification flow passage 106, adherence of moisture on the surface of the blower fan 24 can be minimized. When moisture adheres to the surface of the blower fan 24, foreign substances may adhere to the surface of the blower fan 24 or molds may be likely to grow on the blower fan 24.

Since the air blowing unit 20 is disposed between the filtering flow passage 102 and the humidification flow passage 106, the adherence of foreign substances may be minimized and the flow pressure of air may be provided appropriately.

The connection flow passage 103 may include the clean connection flow passage 104 formed in the air clean module 100 and the humidification connection flow passage 105 formed in the air wash module 200.

When the air wash module 200 is placed on the upper body 120, the clean connection flow passage 104 and the humidification connection flow passage 105 may be connected to each other. When the air wash module 200 is in a separated state, the clean connection flow passage 104 and the humidification connection flow passage 105 may be exposed to the outside.

The clean connection flow passage 104 may be formed in the upper body 120, and the humidification connection flow passage 105 may be formed in the air wash module 200.

The clean connection flow passage 104 and the humidification connection flow passage 105 may also be formed in a form of duct to form a clear flow passage. In this embodiment, when the connection flow passage 103 is distributed as a partial structure of the upper body 120 and a partial structure of the water tank 300 and the air wash module 200 is mounted on the upper body 120, the connection flow passage 103 may be formed.

In this embodiment, the upper body 120 may provide the outer structure of the connection flow passage 103 and the water tank 300 may provide the inner structure of the connection flow passage 103.

That is, the connection flow passage 103 may be formed between the outside of the water tank 300 and the inside of the upper body 120. Therefore, the connection flow passage 103 may be formed between the water tank 300 and the upper body 120. The water tank 300 may form an inner wall of the connection flow passage 103 and the upper body 120 may form an outer wall of the connection flow passage 103.

In such a manner, the structure of the connection flow passage 103 may minimize a structure for forming a flow passage through a distributed arrangement. The connection flow passage 103 may be formed in a vertical direction.

Air passing through the connection flow passage 103 may flow into the humidification flow passage 106. The humidification flow passage 106 may be a section where moisture is supplied. In this embodiment, the humidification flow passage 106 may be a flow passage from the water tank humidification medium 51 to the discharge humidification medium 55.

While air passes through the water tank humidification medium 51, moisture may be supplied to the air in the connection flow passage 51. Then, water drops scattered from the watering unit 400 and moistures evaporated from the water tank 300 may be provided into the water tank 300.

As air passes through the discharge humidification medium 55, moisture may be supplied again to the air in the water tank 300.

Moisture may be supplied in the humidification flow passage 106 through the water tank humidification medium 51, the inside of the water tank 300, and the discharge humidification medium 55.

Air passing through the discharge humidification medium 55 may be exposed to the outside through the discharge flow passage 107.

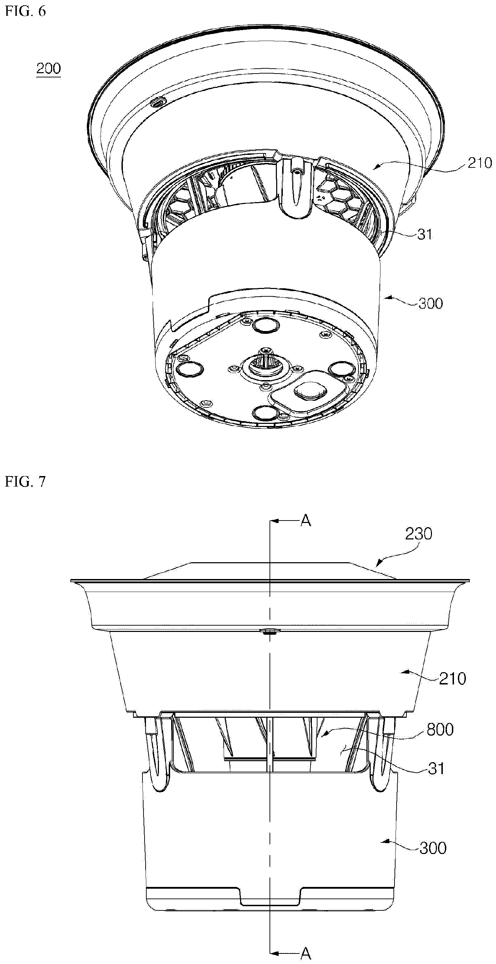

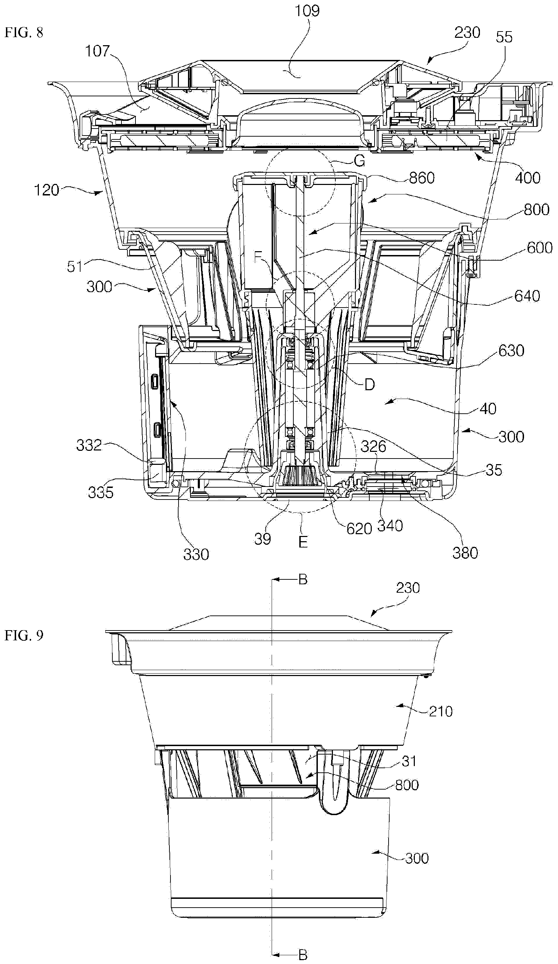

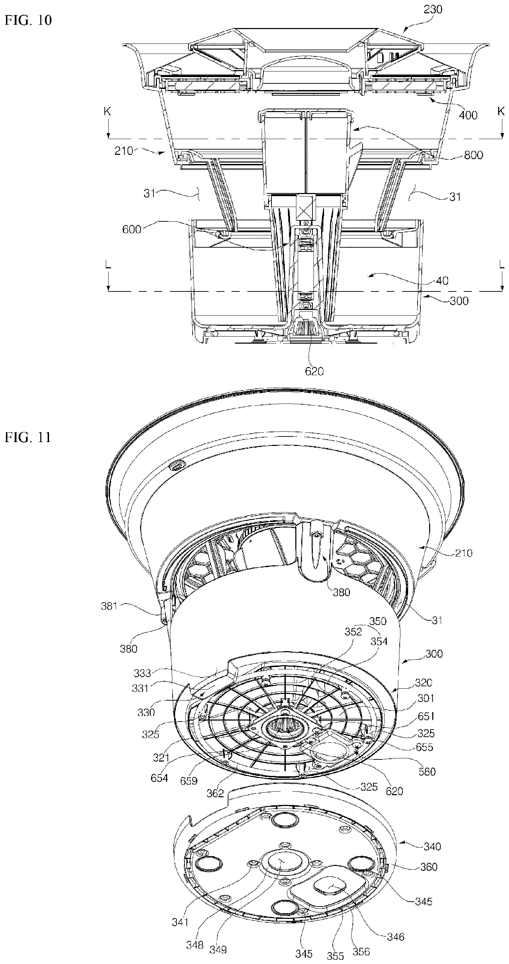

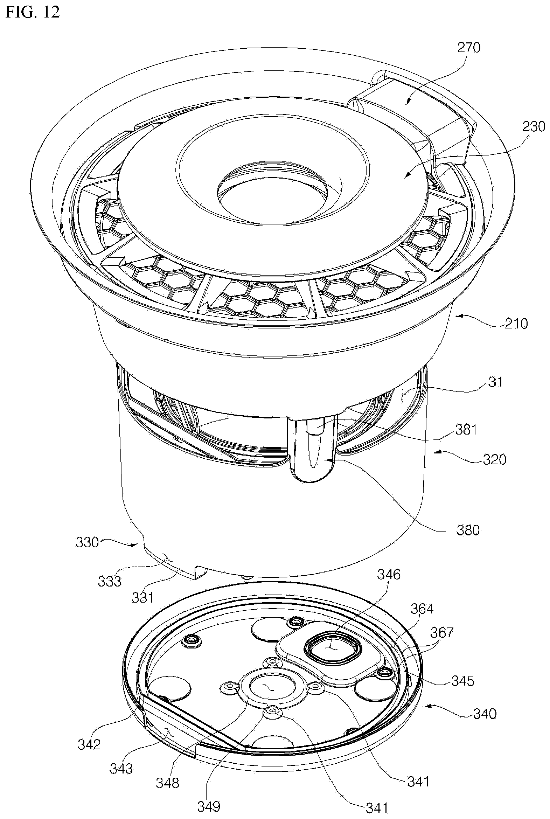

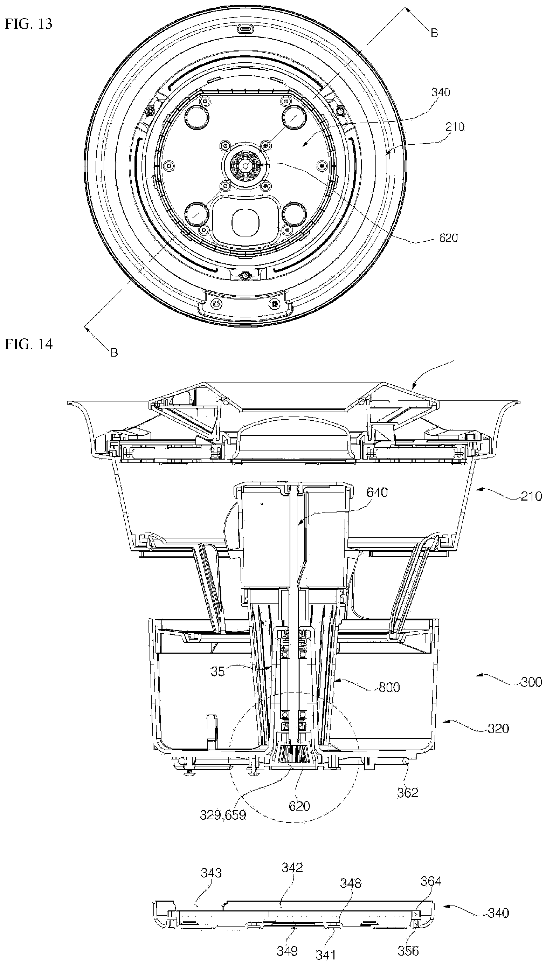

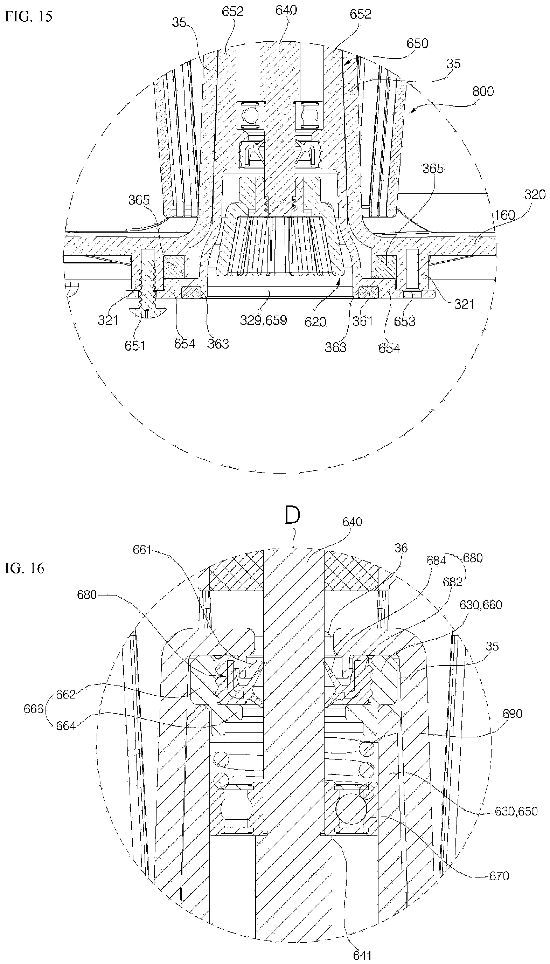

FIG. 6 is a cross-sectional view illustrating the air wash module shown in FIG. 2 when seen from the lower side.FIG. 7 is a front view of the air wash module shown in FIG. 2. FIG. 8 is a cross-sectional view taken along a line A-A of FIG. 7.FIG. 9 is a left cross-sectional view of the air wash module shown in FIG. 2.FIG. 10 is a cross-sectional view taken along a line B-B of FIG. 9. FIG. 11 is an exploded perspective view of the water tank base shown in FIG. 6. FIG. 12 is a perspective view when seen from the upper side of FIG. 11. FIG. 13 is a bottom view of FIG. 11. FIG. 14 is a cross-sectional view taken along a line B-B of FIG. 13. FIG. 15 is a partial enlarged view of FIG. 14.

Referring to the drawings, the water tank 300 may include a water tank body 320 for storing water, a water tank base 340 coupled to the lower part of the water tank body 320, a water tank inlet 31 formed at a side surface of the water tank body 320, a column 35 disposed inside the water tank body 320 and protruding upwardly, and a floater housing 330 disposed inside the water tank body 320 and including a floater 332 that moves in a vertical direction.

In this embodiment, the water tank body 320 may be formed into a cylindrical shape with an opened upper side. Unlike this embodiment, the water tank body 320 may be formed into various shapes.

The column 35 may be formed at the water tank body 320, and a power transmission module 60 described later may be disposed inside the column 35. The column 35 may prevent or suppress the water stored in the water tank body 320 from contacting the power transmission module 60.

The water tank base 340 may be coupled to the outer undersurface of the water tank body 320. A predetermined space may be formed between the water tank base 340 and the water tank body 320. The space formed between the water tank body 320 and the water tank base 340 may be defined as a water tank base space 311. The water tank base space 311 may be sealed from the outside and may be configured to prevent water penetration.

The water tank body extension part 380 may upwardly extend from the water tank 300. The water tank body extension part 380 may form the water tank inlet 31. The water tank inlet 31 may be formed between the water tank body extension parts 380.

The water tank inlet 31 may be formed in the side surface of the water tank body 320. The water tank inlet 31 may be formed with respect to the water tank body 320 in all directions of 360 degrees of a circumference of the water tank body 320. The water tank inlet 31 may communicate with the connection flow passage 103.

The water tank body extension part 380 may guide water flowing down from the inner side surface of the visual body 210 into the water tank 300. The noise of dropping water can be minimized by guiding water flowing down from the visual body 210.

The water tank body extension part 380 may be fastened to the lower end of the visual body 210. A water tank fastening part 381 fastened to the visual body 210 may be disposed on at least one of the plurality of water tank body extension parts 380. The water tank fastening part 381 may be disposed outside the water tank body extension part 380. The visual body 210 and the water tank 300 may be coupled to each other through a fastening member fastened to the water tank fastening part 381.

The column 35 may be disposed at the water tank body 320. In this embodiment, the column 35 may be formed in a conical shape. The watering housing 800 may be installed to surround the column 35. In this embodiment, the column 35 may be integrally formed with the water body 320. The column 35 may be formed protruding upwardly from the undersurface of the water tank body 320.

The floater housing 330 may be formed inside the water tank body 320. The floater 322 may be disposed inside the floater housing 330. The floater 332 may be formed of a material having a lighter specific gravity than water and move vertically according to a level of water stored in the water tank 300 inside the floater housing 330.

The floater housing 330 may be installed at the inner sidewall of the water tank body 320. The floater housing 330 may extend long in a vertical direction. The floater housing 330 may have a structure where water of the water tank body 300 flows.

The lower end 331 of the floater housing 330 may protrude downwardly from the undersurface of the water tank body 320. A space formed protruding toward the lower side of the water tank body 320 may be defined as a floater storage space 333.

When the floater 332 is located in the floater storage space 333, it may be a state that there is no water in the water tank 300.

The floater 332 may be part of a water level sensor. A permanent magnet 335 may be disposed at the floater 332. The water level sensor may include a magnetic sensor (not shown) for detecting the magnetic force of the permanent magnet 335. The magnetic sensor may be disposed at the upper body 120.

Therefore, the water level sensor may detect a water level of the water tank 300 in a non-contact method. Especially, since the water tank 300 is a separable structure, it may be desirable to detect a water level through a non-contact method. Whether the water tank 300 is mounted may be determined by using a signal detected from the water level sensor. For example, when the magnetic sensor detects the permanent magnet, a controller (not shown) may determine that the water tank 300 is mounted.

The water tank base 340 may include a base border 342 protruding upwardly from the undersurface, and a groove 343 where the lower end 331 of the floater housing 330 is inserted may be formed in the base border 342. The lower end 331 may be inserted into the groove 343. The lower end 331 may be exposed through the groove 343. The lower end 331 of the floater housing 330 exposed through the groove 343 may allow easy detection of the magnetic sensor.

When the lower end 331 is surrounded by the base border 342, a magnetic field signal for the permanent magnet may be reduced and due to this, incorrect detection may occur.

By exposing the lower end 331 through the groove 343, the permanent magnet of the floater 332 located inside the lower end 331 may be easily detected.

A configuration for improving the rigidity of the water tank 300 may be disposed in the water tank body 320 and the water tank base 340. The water tank 300 may be used as a space for storing water and also may support the watering unit 400 rigidly. Through this, the water tank 300 should suppress vibration occurring from the watering unit 400.

When the watering unit 400 is not supported sufficiently, the floor 301 of the water tank body 320 may be changed or shaken, and vibration may occur. The vibration occurring from the water tank 300 may spread throughout the entire structure and therefore, an adverse effect on the entire humidification and air cleaning apparatus may occur.

In order to minimize this, a configuration for improving the rigidity may be disposed in the water tank body 320 and the water tank base 340.

The undersurface of the column 35 formed at the water tank body 320 may be open. The open undersurface of the column 35 may be referred to as a water tank body insertion hole 329. A bearing housing 650 described later may be inserted through the water tank body insertion hole 329. The bearing housing 650 may be a composition of the power transmission module 600.

The base insertion hole 349 may be formed inside the water tank base 340. The base insertion hole 349 may be disposed at the lower side of the water tank body insertion hole 329. The bearing insertion hole 349 may be located at the lower side of the bearing housing 650.

The lower part of the bearing housing 650 may be exposed through the base insertion hole 349. A first coupler 610 described later may be inserted into the base insertion hole 349.

The bearing housing 659 may include a bearing housing body 652 inserted into the column 35 and a housing flange 654 formed at the lower end of the bearing housing body 652 and closely contacting the undersurface of the water tank body 320.

The lower surface of the bearing housing 650 may be formed open. The open undersurface of the hearing housing 650 may be referred to as a bearing housing insertion hole 659. A second coupler 620 described later may be disposed in the bearing housing insertion hole 659.

The bearing housing insertion hole 659 and the base insertion hole 349 may communicate with each other.

The base insertion hole 349 may be located at the lower side of the bearing housing insertion hole 659. The second coupler 620 may be exposed through the base insertion hole 349. The first coupler 610 may be inserted through the base insertion hole 349 and may be detachably coupled to the second coupler 620.

The housing flange 654 may be formed to the outside in a radial direction. The housing flange 654 may closely contact the lower undersurface of the water tank body 320. When seen from a plane, the housing flange 654 may be formed wider than the plane of the column 35.

The column 35 and the housing flange 654 may be disposed on the concentric axis.

The housing flange 654 may be fastened to the water tank 300 through a fastening member 651. The fastening member 651 may be fastened to the water tank body 320 through the housing flange 654.

Separately from a first fastening member 651 for fixing the bearing housing 650, a fastening member 655 for fixing the water tank body 320 and the water tank base 340 may be disposed.

The fastening member 651 for fixing the bearing housing 650 may be defined as the first fastening member 651 and the fastening member 655 for fixing the water tank body 320 and the water tank base 340 may be defined as a second fastening member.

In this embodiment, the first fastening member 651 may fasten the water tank base 340, the housing flange 654, and the water tank body 320 at a time. Since the first fastening member 651 fastens three compositions at the same time, the bearing housing 650 may be more robustly fixed. Since the first fastening member 651 fastens three compositions at the same time, the lower rigidity of the water tank 300 may be improved.

In order to install the first fastening member 651, fastening parts 321 and 341 may be formed at the water tank body 320 and the water tank base 340, respectively.

A body fastening part 321 formed at the water tank body 320 may be formed in a boss shape, and base fastening part 341 formed at the water tank base 340 may be formed in a hole shape.

A flange fastening part 653 that the first fastening member 651 penetrates may be formed at the housing flange 654. The flange fastening part 653 may be in a hole shape.

The first fastening member 651 is a screw and is fixed to the body fastening part 321 through the base fastening part 341 and the housing flange 654. The first fastening member 651 is fastened to the upper side at the lower side.

Each of the first fastening member 651 and the fastening parts 341, 653, and 321 may be formed in plurality. The first fastening member 651 may be disposed at least two, and in this embodiment, four may be radially disposed based on the power transmission axis 640.

When seen from a plane, the first fastening member 651 may be disposed at 90-degree equal intervals on the basis of the power transmission axis 640.

Separately from a first fastening member 651 for fixing the bearing housing 650, a fastening member 655 for fixing the water tank body 320 and the water tank base 340 may be disposed.

The first fastening member 651 for fixing the bearing housing 650 may be defined as the first fastening member 651 and the fastening member 655 for fixing the water tank body 320 and the water tank base 340 may be defined as a second fastening member 655.

The fastening member 655 may improve the rigidity of the water tank 300 by coupling the water tank body 320 and the water tank base 340.

The second fastening member 655 is for coupling the water tank body 320 and the water tank base 340. Unlike this embodiment, through a mutual catch through a hook instead of a fastening member, a water tank body and a water tank base may be coupled to each other. When coupling is implemented through a mutual catch, since a fine interval is formed, it may be vulnerable to vibration. In this embodiment, in order to prevent this, the water tank body 320 and the water tank base 340 are coupled to each other through the second fastening member 655.

The second fastening member 655 may be fastened at the lower part of the water tank base 340 and fastened to the water tank body 320 through the water tank base 340. A fastening part 325 to which the second fastening member 655 is fastened may be formed at the undersurface of the water tank body 320.

A fastening part 321 coupled to the first fastening member 651 may be defined as a first fastening part 321. A fastening part 325 coupled to the second fastening member 655 may be defined as a second fastening part 325. A fastening part 341 formed at the water tank base 340 may be defined as a base fastening part 341.

The second fastening part 325 may be formed protruding downwardly from the undersurface of the water tank body 320. The second fastening part 325 may be formed in a boss shape.

The second fastening part 325 may be disposed radially on the basis of the power transmission axis 640. The second fastening part 325 may be disposed in plurality around the power transmission axis 640 and each may be disposed at an equal interval. In this embodiment, six second fastening parts 325 may be disposed at 60-degree equal intervals on the basis of the power transmission axis 640.

Through the second fastening member 655, the water tank base 340 may closely contact the undersurface of the water tank body 320 and may be fixed to it, and also may closely contact the housing flange 654.

A flange supporter 348 for supporting the housing flange 654 may be formed at the water tank base 340. The flange supporter 348 may protrude upwardly.

The flange supporter 348 may be formed around the base insertion hole 349. In this embodiment, the flange supporter 348 may be formed circularly along the base insertion hole 349.

The base fastening part 341 may be disposed outside the flange supporter 348. That is, when the flange supporter 348 supports the bearing housing 650, the first fastening member 651 may fasten the water tank base 340, the housing flange 654, and the water tank body 320.

Moreover, ribs for improving each strength may be disposed at the water tank body 320 and the water tank base 340.

A rib formed at the water tank 320 in order for strength enhancement may be referred to as a body enhancement rib 350 and a rib formed at the water tank base 340 may be referred to as a base enhancement rib 355.

The body enhancement rib 350 may be formed at the floor 301 of the water tank body 320. The body enhancement rib 350 may be formed protruding downwardly from the undersurface of the water tank body 320.

The body enhancement rib 350 may include a first enhancement rib 352 formed radially based on the power transmission axis 640 and a second enhancement rib 354 formed circumferentially based on the power transmission axis 640.

The first enhancement rib 352 may be formed extending from the water tank body insertion hole 329 to the edge. The first enhancement rib 352 may be radially formed in plurality.

The second enhancement rib 354 may be disposed to form a concentric circle to the outside in a radial direction from the water tank body insertion hole 329. The second enhancement rib 354 may be disposed in plurality to the outside in a radial direction while forming a concentric circle.

The first enhancement rib 352 and the second enhancement rib 354 may intersect each other.

Through the first enhancement rib 352 and the second enhancement rib 354, a thickness of the water tank body 320 may be minimized and its strength may be maintained with the minimized thickness.

Through the first enhancement rib 352 and the second enhancement rib 354, it may be minimized that the vibration of the bearing housing 650 is delivered to the outside of the water tank 300 in a radial direction.

Through the first enhancement rib 352 and the second enhancement rib 354, eccentricity may be minimized during an operation of the watering unit 400. Since the watering unit 400 extends long in a vertical direction, when the strength of the floor 301 of the water tank 300 is enhanced, eccentricity may be minimized at the upper end of the watering unit 400.

The base enhancement rib 355 may be formed along the edge of the water tank base 340.

A groove 356 concaved in a vertical direction may be formed in the water tank base 340, and the base enhancement rib 355 may be formed at the groove 356.

The groove 356 may be formed along the edge of the water tank base 340. The groove 356 may form a closed curve when seen from the undersurface of the water tank base 340.

The base enhancement rib 355 may be disposed in plurality along the groove 356.

Moreover, a sealing structure for suppressing water penetration may be disposed between the water tank body 320 and the water tank base 340.

A first packing for sealing the inner edges of the water tank body 320 and the water tank base 340 and a second packing 362 for sealing the outer edges of the water tank body 320 and the water tank base 340 may be disposed.

The first packing 361 may prevent water or moisture from entering through the base insertion hole 349. The second packing 362 may prevent water or moisture from entering through the outer edges of the water tank body 320 and the water tank base 340.

In order to install the first packing 361, a first packing installation groove 363 may be disposed. The first packing installation groove 363 may be formed in at least one of the flange supporter 348 or the housing flange 654. In this embodiment, the first packing installation groove 363 may be formed at the undersurface of the housing flange 654. The first packing installation groove 363 may form a closed curve around the base insertion hole 349.

The first packing installation groove 363 may be formed concave upwardly. When the flange supporter 384 closely contacts the housing flange 654, sealing is implemented as the first packing 361 closely contacts it.

Moreover, a packing 365 may be installed between the housing flange 654 and the water tank body 320. The packing 365 may be disposed at the upper side of the housing flange 654. The packing 365 may seal the water tank body insertion hole 329. The packing 365 may form a closed curve along the water tank body insertion hole 329.

In this embodiment, the packing 365 may be disposed at the lower side of the water tank body 320, and closely contact between the bearing housing 650 and the water tank body 320 during the fastening of the first fastening member 651. The packing 365 may be disposed at the inside compared to the first fastening member 651 or the body fastening part 321.

Also, in order to install the second packing 362, a second packing installation groove 364 may be disposed.

The second packing installation groove 364 may be disposed in at least one of the water tank body 320 and the water tank base 340. In this embodiment, it may be formed at the upper surface of the water tank base 340. The second packing installation groove 364 may be formed concave downwardly.

The second packing installation groove 364 may form a closed curve along the edge of the water tank base 340. The second packing installation groove 364 may be formed by a rib 367 protruding upwardly from the upper surface of the water tank base 340.

In this embodiment, the second packing installation groove 364 may be located at the upper side of the base enhancement rib 355. The second packing installation groove 364 may be disposed at the upper side of the groove 356 where the base enhancement rib 355 is disposed.

That is, the groove 356 and the second packing installation groove 364 for the base enhancement rib 355 may be disposed vertically and through this, the second packing installation groove 364 may enhance the strength.

The second packing installation groove 364 may be formed as avoiding the lower end 331 of the floater housing 330. The lower end 331 of the floater housing 330 may be located outside the packing installation groove 364.

Moreover, a window module 390 may be installed at the undersurface of the water tank 300 to transmit light. The window module 390 may transmit ultraviolet rays.

A body opening part 326 may be formed at the water tank body 320. A base opening part 346 may be formed in the water tank base 340. The base opening part 346 may be located at the lower side of the body opening part 326. The body opening part 326 and the base opening part 346 may be disposed in a vertical direction.

The window module 390 may be disposed between the water tank body 320 and the water tank base 340. The window module 390 may closely contact between the water tank body 320 and the water tank base 340.

In this embodiment, the window module 390 may be fastened to the undersurface of the water tank body 320 and seal the body opening part 326.

In relation to the window module 390, an ultraviolet module 290 for providing ultraviolet rays may be disposed at the upper body 120. Ultraviolet rays generated from the ultraviolet module 190 may penetrate the window module 390 to be projected into the water tank 300. The water stored in the water tank 300 may be sterilized through the ultraviolet rays.

The water of the water tank 300 may rotate in one direction by the rotation of the watering housing 800.

When the water of the water tank 300 rotates, the flow velocity of the water rotating in a close distance to the watering housing 800 may be different from the flow velocity of the water rotating along the inner wall of the water body 320.

A leveler for allowing the height of water rotating in one direction to be uniform may be disposed at the water tank 300. The leveler is for reducing the height deviation of rotating water. That is, a leveler is for minimizing the height of the water rotating outside and the height of the water rotating inside.

The leveler may guide the water rotating outside the water tank 300 to the inside. The lever may be disposed inside the water tank 300. The leveler may be disposed at the floor or sidewall of the water tank 300. The leveler may connect the floor and the sidewall of the water tank 300.

The leveler may aggressively generate a turbulent flow with respect to water rotating in one direction. The leveler may generate an intentional resistance with respect to the uniformly flowing water.

In this embodiment, the leveler may be a flow guide 310. The flow guide 310 formed at the undersurface of the water tank 300 will be described.

The flow guide 310 for guiding the stored water to the watering housing 80 may be disposed at the undersurface of the water tank 300. The flow guide 310 may be formed integrally with the water tank 300. In this embodiment, the flow guide 310 may be formed integrally with the water tank body 320. The flow guide 310 may be formed protruding upwardly from the undersurface of the water tank body 320.

The watering housing 800 may form a suction gap 801 as spaced from the floor of the water tank 300. When a water level is lower than the suction gap, the watering unit 400 may not operate.

When a water level of the water tank 300 is an empty water level, the leveler may be effective.

The empty water level is a water level higher than the suction gap 801, and when the watering housing 800 rotates, is a water level lower than the suction gap 801.

If the lower end of the watering housing 800 is not immersed in water, water may not be pumped.

When the watering housing 800 stops, since a water level is higher than the suction gap 801, water may be sprayed through a nozzle 810 but after the watering housing 800 rotates, a water level may be lower than the suction gap 801.

This is because that the central water rotates concentratedly to the outside of the water tank 300 by the rotation of the watering housing 800.

The flow guide 310 may be for suppressing such a water concentration.

When water stored in the water tank 300 is empty, the flow guide 310 may improve the drawing efficiency of the water housing 800.

The flow guide 310 may form a gradient at the floor of the water tank 300 and provide a flow in a rising direction to water rotating in one direction. Additionally, the flow guide 310 may guide water rotating in the water tank 300 toward the watering housing 800.

The flow guide 310 may guide water from the outside of the water tank 300 to the inside.

The flow guide 310 may guide from the outside of the water tank 300 toward the watering housing 800.

The flow guide 310 may be integrally formed with the water tank 300. Unlike this embodiment, after separate components are manufactured, they may be assembled.

The flow guide 310 may guide water flowing along the inner side of the water tank 300 toward the center where the watering housing 800 is located. The flow guide 310 may form a minimum separation distance (for example, 5 mm) to the watering housing 800. The flow guide 310 may provide effects such as empty water efficiency improvement, nose reduction, and vibration reduction.

The flow guide 310 may be spaced a predetermined interval away from the inner wall of the water tank body 320.

The flow guide 310 may allow a flow velocity in the water tank 300 to be uniform. For this, when seen on a plane, an angle between the length direction of the flow guide 310 and the outer side surface of the watering housing 800 may be formed within 90 degrees.

The flow guide 310 may include a first inclination surface 312 and a second inclination surface 314.

The first inclination surface 312 is be formed toward the flow direction of water. Rotating water may be received through the first inclination surface 312. Water rotating along the first inclination surface 312 may be railed upwardly. The first inclination surface 312 may guide water rotating along the inner edge of the water tank 300 toward the watering housing 800.

The second inclination surface 314 is be formed opposite to the first inclination surface 314. A boundary 315 where water overflows is formed between the first inclination surface 312 and the second inclination surface 314. When seen on a plane, in this embodiment, the boundary 315 is disposed in a tangential direction with respect to the surface of the watering housing 800.

The flow guide 310 may provide an effect with only one. In this embodiment, the flow guide 310 may be disposed in two.

Then, a watering unit 400 disposed inside the water tank 300 will be described.

The watering unit 400 may rotate the watering housing 800 disposed inside the water tank 300 and spay water stored inside the water tank 300 to the inner side surface of the visual body 210 through the rotation of the watering housing 800.

The watering unit 400 may provide a structure for rotating the watering housing 800. The watering unit 400 may provide a power transmission module 600 for delivering power to the watering housing 800 in a separable structure of the water tank 300 and the upper body 120.

A structure of the watering unit 400 will be described in more detail as follows.

The watering unit 400 may include the watering housing 800, a watering motor 42, and the power transmission module 600.

The power transmission module 600 may include a watering housing 800 disposed inside the water tank 300 to draw the water of the water tank as rotating, pumping the drawn water upwardly, and discharging the pumped water to the outside, a watering motor 42 for providing a torque to the watering housing 800, and a power transmission module 600 for delivering a torque of the watering motor 42 to the watering housing 800.

After pumping the water stored in the water tank 300 upwardly, the watering housing 800 may have a configuration for spraying the pumped water to the outside in a radial direction.

The watering motor 42 may have a configuration for providing a torque for rotating the watering housing 800.

The power transmission module 600 may have a configuration for transmitting a torque of the watering motor 42 to the watering housing 800.

The watering housing 800, the watering motor 42, and the power transmission module 600 may be all installed at the water tank 300. In this case, a user may be required to lift the watering motor 42 when separating the air wash module 200. Additionally, in a case that even the watering motor 42 is assembled to the air wash module 200, if the air wash module 200 is required to be separated from the air clean module 200, the power supply structure of the watering motor 42 should be separable.

Therefore, this embodiment may suggest a structure where the heavy watering motor 42 is disposed at the upper body 120 and only the watering housing 800 and the power transmission module 600 are separated. A structure as in this embodiment may minimize the weight of the separable air wash module 200.

In this embodiment, the watering housing 800 and the watering motor 42 may be separable. The watering housing 800 may be installed inside the air wash module 200, and the watering motor 42 may be installed inside the air clean module 100. When the air wash module 200 is separated, the watering housing 800 may be separated from the air clean module 100 together with the water tank 300.

In order for a separation structure of the watering housing 800 and the watering motor 42, in this embodiment, the power transmission module 500 may be designed to be separable.

Next, a power transmission module will be described in more detail.

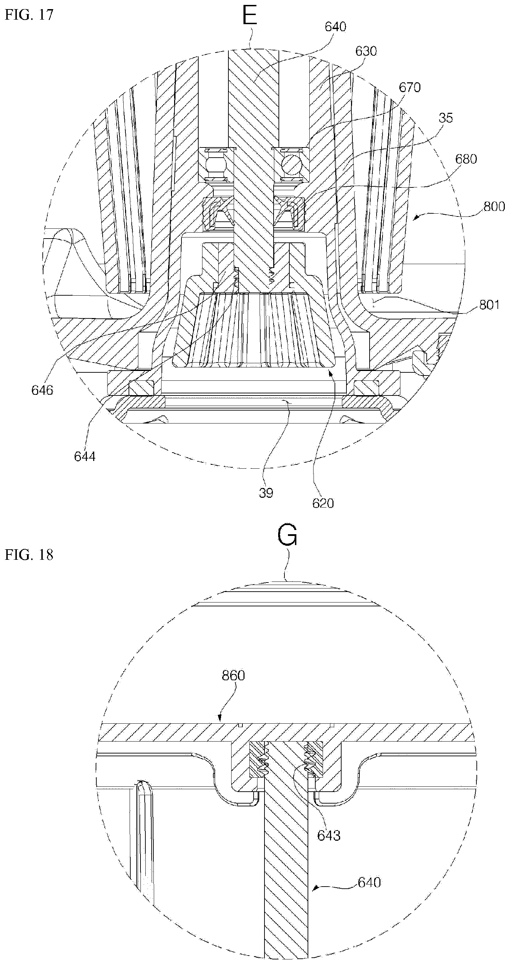

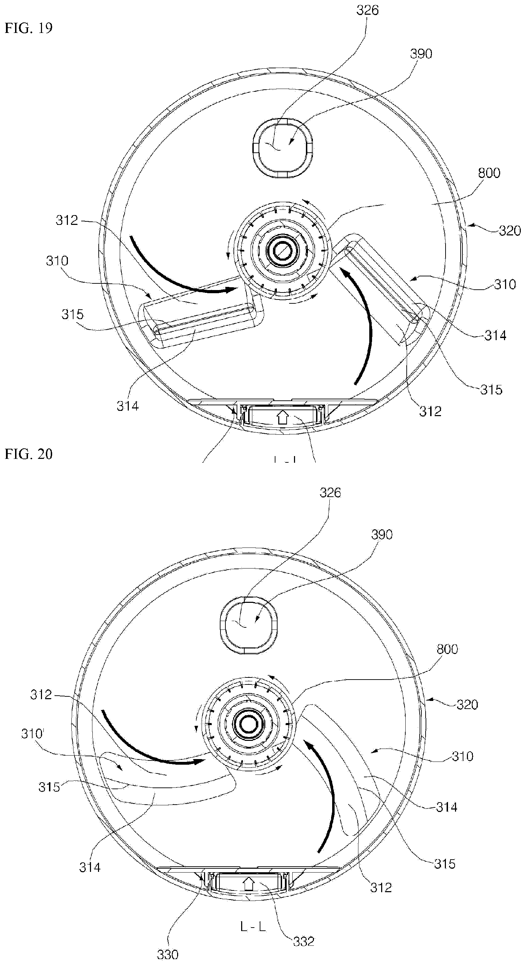

FIG. 16 is an enlarged view of D shown in FIG. 8. FIG. 17 is an enlarged view of E shown in FIG. 8. FIG. 18 is an enlarged view of G shown in FIG. 8. FIG. 19 is a cross-sectional view taken along a line L-L shown in FIG. 10.

The power transmission module 600 may include a separable coupler 610 for delivering a torque of the watering motor 42 to the watering housing 800.

A coupler disposed in the air clean module 100 and coupled to the watering motor 42 may be defined as the first coupler 610.

A coupler disposed in the air wash module 200 and separably coupled to the first coupler 610 may be defined as the second coupler 610.

One of the first coupler 610 and the second coupler 620 may have a male shape, and the other may have a female shape. In this embodiment the first coupler 610 may have a male shape, and the second coupler 620 may have a female shape. In this embodiment, the first coupler 610 may be separably coupled to and inserted into the second coupler 620. Unlike this embodiment, the second coupler 620 may be coupled to and inserted into the first coupler 610.

The watering motor 42 may be installed in the upper body 120. The watering motor 42 may be located over and spaced from the blower motor 22. The water tank 300 may be disposed in the upper body 120. When the water tank 300 is placed on the upper body 120, the first and second couplers 610 and 620 may be power-transmittably connected.

The watering motor shaft 43 of the watering motor 42 may be disposed so as to face upward. The first coupler 610 may be installed on the upper end of the watering motor shaft 43.

The upper body 120 may include an upper inner body 122 where the water tank 300 is mounted, an upper outer body 128 coupled to the upper inner body 122, disposed outside the upper inner body 122, and forming the appearance of the base body 110 as disposed outside the upper inner body 122 and coupled to the lower body 130, an air guide 124 disposed between the upper inner body 122 and the upper outer body 128 and guiding air to the upper side of the upper inner body 122, and an outer visual body 214 coupled to the upper outer body 128 and formed of a transparent material to be disposed outside the visual body 128.

The first coupler 610 is disposed at the upper inner body 122. The first coupler 610 may be disposed inside the upper inner body 122. The first coupler 610 may be disposed at the upper inner body 122 and exposed upwardly.

The first coupler 610 may be manufactured in a form that an upper section is narrow and a lower section is wide. The first coupler 610 may be in a form such as a cone and a pyramid.

The first coupler 610 may be formed with a section that becomes narrower as it goes upwardly. A teeth shape may be formed at the outer circumferential surface of the first coupler 610. The teeth shape of the first coupler 610 may be disposed radially on the basis of a watering motor axis 43. The teeth shape of the first coupler 610 may form a serration with respect to a circumferential direction of the watering motor axis 43.

The power transmission module 600 is for delivering a torque of the watering motor 42 to the watering housing 800. In this embodiment, in relation to the power transmission module 600, most of the configuration may be installed at the water tank 300 and a partial configuration such as the first coupler 610 may be installed at the upper body 120.

The power transmission module 600 may include a power transmission housing 630 disposed inside the column 35 of the water tank 300, a power transmission axis 640 disposed inside the power transmission housing 630, protruding upwardly as penetrating the power transmission housing 630, and providing a torque to the watering housing 800, a bearing 670 disposed between the power transmission axis 640 and the power transmission housing 630, a second coupler 620 coupled to the lower end of the power transmission axis 640 and delivering a torque to the power transmission axis 640, and a first coupler 610 coupled to the watering motor axis 43, detachably coupled to the second coupler 620, and delivering a torque of the watering motor axis 43 to the second coupler 620 when coupled to the second coupler 620.

In this embodiment, in order to prevent the power transmission module 600 from contacting water, it may be installed inside the column 35.

In this embodiment, the power transmission housing 630, the power transmission axis 640, the bearing 670, and the second coupler 620 may be disposed inside the column 35.

The power transmission axis 640 may be installed to vertically penetrate the power transmission housing 630. The power transmission axis 640 may rotate while penetrating the power transmission housing 630.

The power transmission housing 630 may be formed of a metallic material. The power transmission housing 630 may be formed of a high corrosion-resistant aluminum or brass.

The power transmission housing 630 may be installed inside the water tank 300. A water tank body insertion hole 329 for exposing the first coupler 610 may be formed at the water tank 300. The power transmission housing 630 may seal the upper side of the water tank body insertion hole 329.

The power transmission axis 640 may penetrate the power transmission housing 630 vertically. The upper end of the power transmission axis 640 may be coupled to the watering housing 800 and its lower end may be coupled to the second coupler 620.

In this embodiment, the second coupler 620 may be located at the undersurface upper side of the water tank 300, and may be disposed inside the power transmission housing 630. Unlike this embodiment, the second coupler 620 may be disposed at the undersurface lower side of the water tank 300.

The bearing 670 may be disposed between the power transmission housing 630 and the power transmission axis 650. In this embodiment, the power transmission axis 640 may be disposed to penetrate the bearing 670.

The power transmission housing 630 may include a bearing housing 650 having an open upper side and lower side, a housing cap 660 coupled to the upper side of the hearing housing 650, where the power transmission axis 640 penetrates vertically, an axis gasket 680 disposed between the housing cap 660 and the power transmission axis 640 and insertingly fixed to the housing cap 660, and a housing elastic member 690 installed between the bearing 670 and the housing cap 660 to provide elasticity.

A bearing support end 641 for supporting the bearing 670 may be formed at the power transmission axis 640. The bearing 670 may be supported by the bearing support end 641. The lower diameter of the bearing support end 641 may be formed greater than the upper diameter. The bearing 680 may be supported by the bearing support end 641 after inserted from the upper side of the power transmission axis 640.

The housing cap 660 may be coupled to the upper end of the bearing housing 650. The housing cap 660 may be insertingly fixed to the bearing housing 650. The housing cap 660 may be formed in a ring shape. A hollow 661 may be formed inside the housing cap 660 and the power transmission axis 640 may penetrate the hollow 661 vertically.

The housing cap 660 may include a housing cap body 662 supported by the bearing housing 650 and having a hollow 661 that the power transmission axis 640 penetrates and a cap support part 664 formed at the housing cap body 662 and supporting the axis gasket 680.

The cap support part 664 may be formed protruding toward the power transmission axis 640. The axis gasket 680 may be supported by the cap support part 664.

The housing cap 660 may be disposed under the upper side of the column 35. A column opening part 39 that the power transmission axis 640 penetrates may be formed at the column 35.

The housing cap 660 may support the axis gasket 680 and allow the axis gasket 680 to closely contact the inner upper side of the column 35.

The axis gasket 680 may be formed of an elastic material.

The axis gasket 680 may prevent the water of the water tank 300 from flowing into the column 35. Additionally, the axis gasket 680 may prevent water from flowing into the bearing housing 650.

The axis gasket 680 may include a gasket body 682 closely contacting the cap support part 664 and a gasket diaphragm 684 formed protruding from the gasket body 682 toward the power transmission axis 640.

The gasket body 682 may be formed in a " 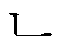 "-shaped section and the outer side and the lower side may be supported by the housing cap 660. The gasket diaphragm 684 may be formed integrally with the gasket body 682.

The gasket diaphragm 684 may closely contact the outer side of the power transmission axis 640. The gasket diaphragm 684 may be formed in two in a vertical direction and prevent a water flow doubly.

The housing elastic member 690 may be disposed between the housing cap 660 and the bearing 670. The housing elastic member 690 may elastically support the housing cap 660 and the lower end may elastically support the bearing 670.

The housing elastic member 690 may press the bearing 670 downwardly through elastic force. The bearing 670 may be supported by the bearing support end 641 through the housing elastic member 690.

The housing elastic member 690 may minimize the vibration of the bearing 670 when the power transmission axis 640 rotates.

Although the power transmission housing 630 is installed inside the column 35 in this embodiment, unlike this embodiment, the power transmission housing 630 may be exposed to the inside of the water tank 300.

In this embodiment, the power transmission axis 640 may be installed extending long in a vertical direction. Since the power transmission axis 640 is installed extending long in a vertical direction, the capacity of the water tank 300 may be easily increased to a desired capacity.

If the capacity of the water tank 300 is small, the second coupler 620 may be directly installed to the watering housing 800. In this case, a composition such as the power transmission axis 640 and the bearing 670 may be omitted and accordingly, the structure becomes simpler.

If the capacity of the water tank 300 is large, the watering housing 800 having a long vertical length may be required. If the length of the watering housing 800 becomes long, vibration occurs during rotation. That is, when a torque is delivered to only the lower side of the watering housing 800, a transformation such as twisting of the watering housing 800 may be occur and there may be a speed difference at the upper side and the lower side of the watering housing 800.

By such a transformation or a speed difference, a large amount of vibration may occur from the watering housing 800. Especially, vibration may be further increased by the water drawn into the watering housing 800 and pumped. When the water drawn into the watering housing 800 is disposed concentratedly, greater vibration may occur.

In this embodiment, since the power transmission axis 640 is coupled to each of the center of gravity and the upper end of the watering housing 800 as extending long in a vertical direction, the above issue may be resolved.

That is, in a structure as in this embodiment, when the height of the watering housing 800 increases as the height of the water tank 300 increases, vibration may be minimized.

In relation to the power transmission axis 640, screw threads 643 and 644 may be formed at the upper end and the lower end, respectively, and bearing support ends 641 and 645 and an axis support end 642 may be formed at the outer peripheral surface.

The screw thread 643 may be assembled with the watering housing cover 860. The lower end screw thread 644 may be assembled with the second coupler 620.

The bearing support ends 641 and 645 and the axis support end 642 may be formed by varying the diameter of the power transmission axis 640. The bearing support ends 641 and 645 may be for supporting a bearing. The axis support end 642 may be for supporting a watering power transmission part 880.

The lower end screw thread 644 may be directly fastened to the second coupler 620. In this embodiment, a separate coupler coupling member 646 may be disposed at a power transmission coupling part 627 of the second coupler 620 and the power transmission axis 640 and the second coupler 620 are coupled through the coupler coupling member 646.

A power transmission axis groove 626 may be vertically formed at the outer peripheral surface of the coupler coupling member 646, and a screw thread (not shown) assembled with the lower end screw thread 644 may be formed at the inner peripheral surface.

FIG. 20 is a view illustrating a leveler according to a second embodiment of the present invention.

A leveler according to this embodiment may be a flow guide 310' formed in a curve.

The flow guide 310' may be formed in a spiral toward the watering housing 800. A plurality of flow guide 310' may be disposed in a spiral shape toward the power transmission axis 640.

In this embodiment, a boundary of the flow guide 310' may be formed in a curve.

Hereinafter, since other components are identical to those of the first embodiment, a detailed description thereof will be omitted herein.

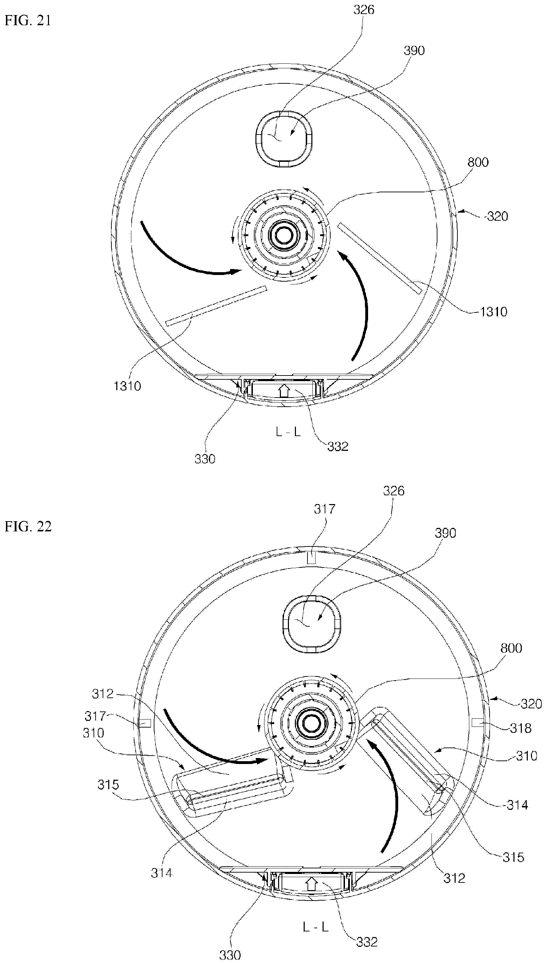

FIG. 21 is a view illustrating a leveler

A leveler may be formed in the shape of a rib 1310 instead of a flow guide.

The rib 1310 may be formed at the floor of a water tank and protrude upwardly. The rib 1310 may extend long in a length direction and may be formed in a straight line shape. Unlike this embodiment, the rib 1310 may be formed in a curved shape.

The rib 1310 may obstruct a rotation in one direction of water in the water tank 300. The rib 1310 may guide water toward the watering housing 800.

The inside of the rib 1310 may be spaced from the watering housing 800 and the outside may be spaced from the inner wall of the water tank 300.

A leveler may have a different form and may be similar to a flowing guide.

Hereinafter, since other components are identical to those of the first embodiment, a detailed description thereof will be omitted herein.

FIG. 22 is a view illustrating a leveler according to a fourth embodiment of the present invention and FIG. 22 is a front cross-sectional view of FIG. 22.

In this embodiment, ribs 317 and 318, that is, a leveler separated from the flow guide 310, may be disposed.

The ribs 317 and 318 may be disposed at the inner sidewall of the water tank 300 and protrude inwardly. The ribs 317 and 318 may be formed to connect the inner sidewall and the floor of the water tank 300.

The ribs 317 and 318 may be radially disposed on the basis of the power transmission axis 640 or the watering housing 800.

The ribs 317 and 318 may be disposed at the outermost of the water tank inside and obstruct a rotation of water. Since the ribs 317 and 318 are disposed at the outermost of the water tank 300, a water level of the outside may be further lowered.

The ribs 317 and 318 may be disposed in plurality and the height of each of the ribs 317 and 318 may be formed differently. By differently forming each rib 318, a turbulent flow with respect to rotating water may be formed aggressively.

Hereinafter, since other components are identical to those of the first embodiment, a detailed description thereof will be omitted herein.

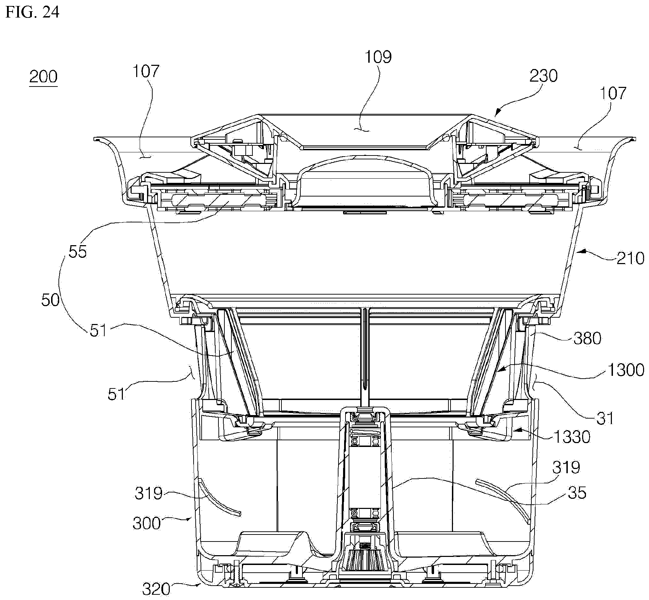

FIG. 24 is a view illustrating a flow guide according to a fifth embodiment of the present invention.

In this embodiment, the rib 319 may be formed in a curve different from the fourth embodiment.

The rib 319 may be formed at the inner sidewall of a water tank. The rib 319 may be formed in a spiral form along the inner sidewall of a water tank.

Hereinafter, since other components are identical to those of the first embodiment, a detailed description thereof will be omitted herein.

## Claims

1. A humidification and air cleaning apparatus comprising:
a water tank (300) to store water;
a watering housing (800) rotatably disposed inside the water tank (300) to draw water of the water tank (300) to the inside as rotating and to spray the drawn water; and
a leveler disposed inside the water tank (300) to obstruct a rotation of water stored in the water tank (300) due to a rotation of the watering housing (800), the leveler comprises a flow guide (310) formed at an inner floor of the water tank (300);
**characterized in that** the flow guide (310) comprises a first inclination surface (312) disposed slanted to the floor and formed toward a flow direction of water, a second inclination surface (314) disposed slanted to the floor and formed slanted in a direction opposite to the first inclination surface (312), and a boundary (315) connecting the first inclination surface (312) and the second inclination surface (314), wherein the boundary (315) is disposed in a tangential direction with respect to the circumference of the watering housing (800).

2. The humidification and air cleaning apparatus of claim 1, wherein the leveler is disposed at an inner floor of the water tank (300) and/or at an inner sidewall of the water tank (300).

3. The humidification and air cleaning apparatus of claim 1 or 2, wherein the leveler forms a gradient at an inner floor of the water tank (300).

4. The humidification and air cleaning apparatus as claimed in any one of the preceding claims, wherein when the watering housing (800) rotates, the leveler is disposed to guide water from the outside of the water tank (300) to the inside.

5. The humidification and air cleaning apparatus of any one of claims 2, 3 or 4, wherein the leveler is formed protruding from the inner sidewall of the water tank (300) toward the inside.

6. The humidification and air cleaning apparatus as claimed in any one of the preceding claims, wherein the leveler comprises a rib (317, 318) protruding from an inner sidewall of the water tank (300) toward the inside.

7. The humidification and air cleaning apparatus as claimed in any one of the preceding claims, wherein the leveler comprises a rib (1310) protruding upwardly from an inner floor of the water tank (300).

8. The humidification and air cleaning apparatus as claimed in any one of the preceding claims, wherein the leveler is formed extending long in a length direction and is formed in a straight line or arc shape.

9. The humidification and air cleaning apparatus as claimed in any one of the preceding claims, wherein the watering housing (800) is spaced away from an inner floor of the water tank (300) to form a suction gap (801) and the leveler guides water to the suction gap (801).

10. The humidification and air cleaning apparatus as claimed in any one of the preceding claims, wherein the first inclination surface (312) is formed toward the flow direction of water, wherein water rotating along the first inclination surface (312) is railed upwardly, wherein the the first inclination surface (312) is guiding water rotating along the inner edge of the water tank (300) toward the watering housing (800).

11. The humidification and air cleaning apparatus of claim 10, wherein an inclination angle of the first inclination surface (312) is formed smaller than an inclination angle of the second inclination surface (314).

12. The humidification and air cleaning apparatus of claim 10 or 11, wherein the inside of the flow guide (310) is spaced apart from the watering housing (800) and the outside of the flow guide (310) is spaced apart from a sidewall of the water tank (300).

13. The humidification and air cleaning apparatus of claim 10, 11 or 12, wherein
the flow guide (310) is disposed in plurality;
the plurality of flow guides (310) are disposed in a circumferential direction on the basis of the watering housing (800); and
the plurality of flow guides (310) are spaced away from each other.

14. The humidification and air cleaning apparatus as claimed in any one of the preceding claims, wherein the watering housing (800) is spaced away from the inner floor of the water tank (300) to form a suction gap (801) and the flow guide (310) is located higher than the suction gap (801).

15. The humidification and air cleaning apparatus as claimed in any one of the preceding claims, wherein the flow guide (310) is formed extending long in a length direction and is formed in a straight line or arc shape.

## Patentansprüche

1. Befeuchtungs- und Luftreinigungsvorrichtung, umfassend:
einen Wassertank (300) zum Speichern von Wasser;
ein Bewässerungsgehäuse (800), das drehbar innerhalb des Wassertanks (300) angeordnet ist, um Wasser aus dem Wassertank (300) drehend nach innen zu ziehen und das gezogene Wasser zu sprühen; und
eine Nivelliereinrichtung, die innerhalb des Wassertanks (300) angeordnet ist, um eine Drehung des im Wassertank (300) gespeicherten Wassers aufgrund einer Drehung des Bewässerungsgehäuses (800) zu verhindern, wobei die Nivelliereinrichtung eine Strömungsführung (310) aufweist, die an einem inneren Boden des Wassertanks (300) ausgebildet ist;
**dadurch gekennzeichnet, dass** die Strömungsführung (310) eine erste Neigungsfläche (312) umfasst, die abgeschrägt zum Boden angeordnet und in Richtung einer Strömungsrichtung des Wassers ausgebildet ist, eine zweite Neigungsfläche (314), die abgeschrägt zum Boden angeordnet und in einer Richtung entgegengesetzt zur ersten Neigungsfläche (312) abgeschrägt ausgebildet ist, und eine Begrenzung (315), die die erste Neigungsfläche (312) und die zweite Neigungsfläche (314) verbindet, umfasst, wobei die Begrenzung (315) in einer tangentialen Richtung in Bezug auf den Umfang des Bewässerungsgehäuses (800) angeordnet ist.

2. Befeuchtungs- und Luftreinigungsvorrichtung nach Anspruch 1, wobei die Nivelliereinrichtung an einem inneren Boden des Wassertanks (300) und/oder an einer inneren Seitenwand des Wassertanks (300) angeordnet ist.

3. Befeuchtungs- und Luftreinigungsvorrichtung nach Anspruch 1 oder 2, wobei die Nivelliereinrichtung einen Gradienten an einem inneren Boden des Wassertanks (300) ausbildet.

4. Befeuchtungs- und Luftreinigungsvorrichtung nach einem der vorhergehenden Ansprüche, wobei, wenn sich das Bewässerungsgehäuse (800) dreht, die Nivelliereinrichtung angeordnet ist, um Wasser von der Außenseite des Wassertanks (300) nach innen zu leiten.

5. Befeuchtungs- und Luftreinigungsvorrichtung nach einem der Ansprüche 2, 3 oder 4, wobei die Nivelliereinrichtung ausgebildet ist, um von der inneren Seitenwand des Wassertanks (300) nach innen vorzustehen.

6. Befeuchtungs- und Luftreinigungsvorrichtung nach einem der vorhergehenden Ansprüche, wobei die Nivelliereinrichtung eine Rippe (317, 318) umfasst, die von einer inneren Seitenwand des Wassertanks (300) nach innen vorsteht.

7. Befeuchtungs- und Luftreinigungsvorrichtung nach einem der vorhergehenden Ansprüche, wobei die Nivelliereinrichtung eine Rippe (1310) umfasst, die von einem inneren Boden des Wassertanks (300) nach oben vorsteht.

8. Befeuchtungs- und Luftreinigungsvorrichtung nach einem der vorhergehenden Ansprüche, wobei die Nivelliereinrichtung so ausgebildet ist, dass sie sich in einer Längsrichtung erstreckt, und geradlinig oder bogenförmig ausgebildet ist.

9. Befeuchtungs- und Luftreinigungsvorrichtung nach einem der vorhergehenden Ansprüche, wobei das Bewässerungsgehäuse (800) von einem inneren Boden des Wassertanks (300) beabstandet ist, um einen Saugspalt (801) auszubilden, und die Nivelliereinrichtung Wasser zum Saugspalt (801) leitet.

10. Befeuchtungs- und Luftreinigungsvorrichtung nach einem der vorhergehenden Ansprüche, wobei die erste Neigungsfläche (312) in Richtung der Strömungsrichtung des Wassers ausgebildet ist, wobei Wasser, das sich entlang der ersten Neigungsfläche (312) dreht, nach oben geführt wird, wobei die erste Neigungsfläche (312) Wasser leitet, das sich entlang der inneren Kante des Wassertanks (300) in Richtung des Bewässerungsgehäuses (800) dreht.

11. Befeuchtungs- und Luftreinigungsvorrichtung nach Anspruch 10, wobei ein Neigungswinkel der ersten Neigungsfläche (312) kleiner als ein Neigungswinkel der zweiten Neigungsfläche (314) ausgebildet ist.

12. Befeuchtungs- und Luftreinigungsvorrichtung nach Anspruch 10 oder 11, wobei die Innenseite der Strömungsführung (310) vom Bewässerungsgehäuse (800) beabstandet ist und die Außenseite der Strömungsführung (310) von einer Seitenwand des Wassertanks (300) beabstandet ist.

13. Befeuchtungs- und Luftreinigungsvorrichtung nach Anspruch 10, 11 oder 12, wobei
die Strömungsführung (310) in einer Mehrzahl angeordnet ist;
die Mehrzahl von Strömungsführungen (310) in einer Umfangsrichtung basierend auf dem Bewässerungsgehäuse (800) angeordnet sind; und
die Mehrzahl von Strömungsführungen (310) voneinander beabstandet sind.

14. Befeuchtungs- und Luftreinigungsvorrichtung nach einem der vorhergehenden Ansprüche, wobei das Bewässerungsgehäuse (800) vom inneren Boden des Wassertanks (300) beabstandet ist, um einen Saugspalt (801) auszubilden, und die Strömungsführung (310) höher als der Saugspalt (801) angeordnet ist.

15. Befeuchtungs- und Luftreinigungsvorrichtung nach einem der vorhergehenden Ansprüche, wobei die Strömungsführung (310) so ausgebildet ist, dass sie sich in einer Längsrichtung erstreckt, und geradlinig oder bogenförmig ausgebildet ist.

## Revendications

1. Appareil d'humidification et d'épuration d'air comportant :
un réservoir d'eau (300) pour stocker de l'eau ;
un boîtier d'arrosage (800) disposé de façon à pouvoir tourner à l'intérieur du réservoir d'eau (300) pour aspirer de l'eau du réservoir d'eau (300) vers l'intérieur lors de la rotation et pour pulvériser l'eau aspirée ; et
un dispositif de mise à niveau disposé à l'intérieur du réservoir d'eau (300) pour entraver une rotation de l'eau stockée dans le réservoir d'eau (300) en raison d'une rotation du boîtier d'arrosage (800), le dispositif de mise à niveau comportant un guide d'écoulement (310) formé sur un fond intérieur du réservoir d'eau (300) ;
**caractérisé en ce que** le guide d'écoulement (310) comporte une première surface d'inclinaison (312) disposée inclinée par rapport au fond et formée vers une direction d'écoulement de l'eau, une seconde surface d'inclinaison (314) disposée inclinée par rapport au fond et formée inclinée dans une direction opposée à la première surface d'inclinaison (312), et une frontière (315) reliant la première surface d'inclinaison (312) et la seconde surface d'inclinaison (314), dans lequel la frontière (315) est disposée dans une direction tangentielle par rapport à la circonférence du boîtier d'arrosage (800).

2. Appareil d'humidification et d'épuration d'air selon la revendication 1, dans lequel le dispositif de mise à niveau est disposé sur un fond intérieur du réservoir d'eau (300) et/ou sur une paroi latérale intérieure du réservoir d'eau (300).

3. Appareil d'humidification et d'épuration d'air selon la revendication 1 ou 2, dans lequel le dispositif de mise à niveau forme un gradient sur un fond intérieur du réservoir d'eau (300).

4. Appareil d'humidification et d'épuration d'air selon l'une quelconque des revendications précédentes, dans lequel lorsque le boîtier d'arrosage (300) tourne, le dispositif de mise à niveau est disposé de manière à guider l'eau depuis l'extérieur du réservoir d'eau (300) jusqu'à l'intérieur.

5. Appareil d'humidification et d'épuration d'air selon l'une quelconque des revendications 2, 3 ou 4, dans lequel le dispositif de mise à niveau est formé en saillie par rapport à la paroi latérale intérieure du réservoir d'eau (300) vers l'intérieur.

6. Appareil d'humidification et d'épuration d'air selon l'une quelconque des revendications précédentes, dans lequel le dispositif de mise à niveau comporte une nervure (317, 318) faisant saillie à partir d'une paroi latérale intérieure du réservoir d'eau (300) vers l'intérieur.

7. Appareil d'humidification et d'épuration d'air selon l'une quelconque des revendications précédentes, dans lequel le dispositif de mise à niveau (317, 318) comporte une nervure (1310) faisant saillie vers le haut à partir d'un fond intérieur du réservoir d'eau (300).

8. Appareil d'humidification et d'épuration d'air selon l'une quelconque des revendications précédentes, dans lequel le dispositif de mise à niveau est formé en s'étendant en long dans une direction longitudinale et est formé en ligne droite ou en forme d'arc.

9. Appareil d'humidification et d'épuration d'air selon l'une quelconque des revendications précédentes, dans lequel le boîtier d'arrosage (800) est espacé d'un fond intérieur du réservoir d'eau (300) pour former un espace d'aspiration (801) et le dispositif de mise à niveau guide l'eau jusqu'à l'espace d'aspiration (801).

10. Appareil d'humidification et d'épuration d'air selon l'une quelconque des revendications précédentes, dans lequel la première surface d'inclinaison (312) est formée vers la direction d'écoulement de l'eau, dans lequel l'eau en rotation le long de la première surface d'inclinaison (312) est soulevée vers le haut, dans lequel la première surface d'inclinaison (312) guide l'eau en rotation le long du bord intérieur du réservoir d'eau (300) vers le boîtier d'arrosage (800).

11. Appareil d'humidification et d'épuration d'air selon la revendication 10, dans lequel un angle d'inclinaison de la première surface d'inclinaison (300) est formé plus petit qu'un angle d'inclinaison de la seconde surface d'inclinaison (314).

12. Appareil d'humidification et d'épuration d'air selon la revendication 10 ou 11, dans lequel l'intérieur du guide d'écoulement (310) est espacé du boîtier d'arrosage (800) et l'extérieur du guide d'écoulement (310) est espacé d'une paroi latérale du réservoir d'eau (300).

13. Appareil d'humidification et d'épuration d'air selon la revendication 10, 11 ou 12, dans lequel
le guide d'écoulement (310) est disposé en pluralité ;
les guides de la pluralité de guides d'écoulement (310) sont disposés dans une direction circonférentielle sur la base du boîtier d'arrosage (800) ; et
les guides de la pluralité de guides d'écoulement (310) sont espacés les uns des autres.

14. Appareil d'humidification et d'épuration d'air selon l'une quelconque des revendications précédentes, dans lequel le boîtier d'arrosage (800) est espacé du fond intérieur du réservoir d'eau (300) pour former un espace d'aspiration (801) et le guide d'écoulement (310) est positionné plus haut que l'espace d'aspiration (801).

15. Appareil d'humidification et d'épuration d'air selon l'une quelconque des revendications précédentes, dans lequel le guide d'écoulement (310) est formé en s'étendant en long dans une direction longitudinale et est formé en ligne droite ou en forme d'arc.
